# EUROPÄISCHE PATENTSCHRIFT

(11) **EP 3 396 930 B1**
(45) Veröffentlichungstag und Bekanntmachung des Hinweises auf die Patenterteilung: **20.11.2019**
(21) Anmeldenummer: 17000700.9
(22) Anmeldetag: 24.04.2017
(51) Int. Cl.: H04M 1/02, H05K 5/00

(54) **EINBAURAHMEN FÜR LCD**
ASSEMBLY FRAME FOR LCD
CADRE DE MONTAGE POUR LCD

(43) Veröffentlichungstag der Anmeldung: 31.10.2018
(73) Patentinhaber: Gigaset Communications GmbH, 46395 Bocholt (DE)
(72) Erfinder: Trummer, Frank, 46282 Dorsten (DE)
(74) Vertreter: Michalski Hüttermann & Partner Patentanwälte mbB

(56) Entgegenhaltungen:
- EP-A2- 0 302 189
- US-A1- 2007 103 407
- US-A1- 2010 002 364

## Beschreibung

Die Erfindung betrifft eine Displayvorrichtung gemäß dem Oberbegriff des Anspruchs 1.

Anzeigevorrichtungen in der die Flüssigkristallanzeige seitlich durch eine Feder gegen einen Anschlag gedruckt wird, sind bekannt. Darüber hinaus sind weitere Federn bekannt, welche die Flüssigkristallanzeige gegen ein Unterteil drücken.

Bei anderen bekannten Anzeigevorrichtungen besteht die Displayblende aus mehreren Teilen. Displayvorrichtungen bestehen üblicherweise aus mehreren Komponenten:
- Display (LCD, Trägermaterial: Glas),
- Folienleiter oder Zebra Leitgummi
- Displayblende,
- diversen Folien,
- diversen Schaumstoffen und
- einem Lichtleiter.

Flexible Folienleiter mit in der Regel mehreren Leiterbahnen werden im Stand der Technik als flexible, flache Folienkabel (FFC =flexible flat cable) bezeichnet. Mit derartigen flexiblen flachen Folienkabeln kann in einfacher Weise eine große Anzahl elektrischer Verbindungen hergestellt werden, beispielsweise für elektrische Bussysteme.

Im Stand der Technik sind zur Kontaktierung beispielsweise sog. Heat-seal-Verfahren bekannt, bei denen die flexiblen Folienleiter unter Wärme und Druck mit den zu kontaktierenden Elementen verklebt werden. Derartige Verbindungen sind in der Regel nicht wieder lösbar.

Aus der US 2007/0103407 ist eine Anzeigevorrichtung bekannt, bei der ein OLED-Panel verschiebbar in ein Gehäuse eingesetzt wird. Das Gehäuse beinhaltet eine Vorder- und eine Rückseite, wobei eine der Vorder- und Rückseite eine Öffnung beinhaltet, die einen Anzeigebereich definiert. Ferner umfasst das Gehäuse einen Schlitz, wobei der Schlitz das OLED-Panel beim Einsetzen in das Gehäuse aufnimmt. Das Gehäuse umfasst ferner einen Anschlag, der die OLED-Platte so fixiert, dass die Bewegung der eingesetzten OLED-Platte in umgekehrter Richtung zu einer Einführungsrichtung eingeschränkt ist.

Die diversen Komponenten werden in senkrechter Richtung montiert und die Displayvorrichtung auf eine Leiterplatte gerastet. Der Herstellungsvorgang ist dadurch umständlich und teuer. Bei dieser Anordnung wirkt sich die Anzahl der Komponenten ungünstig auf die Herstellung aus. es ergibt sich dadurch eine Displayvorrichtung, die aufgrund des Aufbaus, bei einer geringen Veränderung der Abmessungen eines Displays, Anpassungen an sämtlichen Komponenten nach sich zieht. Die notwendigen Anpassungen richten sich auf den Fertigungsprozess sehr negativ aus. Es müssen unter Umständen Werkzeuge angepasst und erneuert werden. Im ungünstigsten Fall bewirkt eine notwendige Änderung des Displays, dass das Produkt komplett redesignt werden muss. Eine solche Neukonstruktion erfordert einen hohen Aufwand wobei unter Umständen die Leiterplattengeometrien angepasst werden müssen, die zu einer Änderung der Gehäuseschale führen können.

Wird die Anzahl der Komponenten einer Displayvorrichtung auf ein Minimum, Displayblende und Display reduziert ergibt sich das Problem, dass die für das Befestigen, auf einer (unverändert belassenen) Leiterplatte, erforderlichen Rastelemente die fehlerfreie Montage des Displayglases in der üblichen senkrechten Richtung nahezu unmöglich machen.

Aufgabe der Erfindung ist es, eine Displayvorrichtung der eingangs genannten Art so auszuführen, dass sowohl die Herstellung der Einzelteile Kostengünstig als auch die Montage besonders einfach wird.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit eine Displayvorrichtung, insbesondere für Mobiltelefone, bei der ein Display in einer Displayblende mit Glasscheibeneffekt für die Sichtfreigabe aufgenommen wird, wobei die einstückig ausgebildete Displayblende das Display abdeckt, die Displayblende mit Führungsnuten zum einschieben des Displays versehen ist, dadurch gekennzeichnet, dass das Display in der eingeschobenen Lage durch mindestens einen hinter deren Ende rastenden Federarm federnd gehalten wird.

Diese Aufgabe wird durch die im kennzeichnenden Teil des Anspruches 1 angeführten Merkmale gelöst. Hierbei ist auch noch zu berücksichtigen, dass die äußeren Abmessungen der in der Regel aus Glasscheiben zusammengesetzten Displays bzw. Flüssigkristallanzeigen relativ große Toleranzen aufweisen. Das Display bzw. die Flüssigkristallanzeige wird in horizontaler Richtung längs der x-Achse in die Displayblende eingeschoben und durch Federarme in der Einbaulage so gehalten und gegen einen Anschlag gedrückt, dass die Toleranzen weitgehend unwirksam sind und ein definiertes Rastermaß, ohne größere Toleranzabweichungen für die elektrischen Anschlüsse, vorgesehen werden kann. Solche eine federnde Lagerung ist besonders Vorteilhaft für die Vorrichtung in Bezug auf Beanspruchungen durch Schock. Eine weitere Vereinfachung und Verbilligung der Fertigung ergibt sich dadurch, dass die Displayblende mit den Halteelementen, den Auflagenpunkten oder Auflagenflächen, dem Anschlag, und den gegenüberliegenden Federarmen aus einem einstückigen Kunststoffkörper hergestellt ist.

Im Gegensatz zum bekannten Stand der Technik von Displayvorrichtungen, wobei die Displayblende aus mehreren Kunststoffkörpern zusammengesetzt wird und das Display zwischen mind. zwei Kunststoffkörpern eingeklemmt ist, besteht gemäß der erfindungsgemäßen Lösung die Displayvorrichtung, insbesondere für Mobiltelefone, bei der ein Display in einer Displayblende mit Glasscheibeneffekt für die Sichtfreigabe aufgenommen wird, wobei die einstückig ausgebildete Displayblende das Display abdeckt, die Displayblende mit Führungsnuten zum einschieben des Displays versehen ist welches das Display in der eingeschobenen Lage durch mindestens einen hinter deren Ende rastenden Federarm federnd gehalten wird.

Die Displayblende lässt sich bei Bedarf ohne Aufwand um einen Lichtleiter zur Beleuchtung des Displays erweitern. Rastelemente am Lichtleiter sorgen dafür, dass dieser während des Montageprozesses nicht von der Displayblende herunterfällt.

Bei derartigen Displayvorrichtungen besteht das Problem, dass das Display bezüglich der Leiterplatte sehr genau positioniert sein muss, da die einzelnen Kontakte auf der Kontaktreihe und damit auch die zugeordneten Kontakte auf der Leiterplatte eng beieinanderliegen. Bereits eine geringe Verschiebung des Displays könnte daher zu einem Fehler in der für die überlappende Kontaktierung vorgesehenen Verbindung führen. Displayblenden sind jedoch verhältnismäßig teuer in der Herstellung, wenn enge Toleranzen gefordert werden. Die geforderte Genauigkeit der zur überlappenden Kontaktierung vorgesehenen Verbindungen ist bei der Herstellung der Leiterplatte dagegen problemlos möglich.

Die Positionierung zwischen Displayvorrichtung und Leiterplatte wird durch Rastelemente vorgenommen. Dadurch, dass die Displayblende an einer oder mehreren Seiten zusätzlich zu den Rastelementen mit Nasen oder Fixierelementen versehen ist, welche in an der Leiterplatte des Endgeräts angebrachte Aussparungen einrasten und auf diese Weise die Displayvorrichtung gegen die Leiterplatte pressen.

In einer bevorzugten Ausführungsform der Erfindung ist vorgesehen, dass die Displayblende an zwei gegenüberliegenden Seiten Rasthaken und/oder an zwei gegenüberliegenden Seiten Fixiernasen aufweist. Durch Einrasten der Rasthaken in die Leiterplatte wird die Displayblende in der eingerasteten Position durch Fixiernasen fixiert.

Gemäß einer vorteilhaften Ausführungsform der Erfindung ist vorgesehen, dass mindestens ein Anschlag zur Herbeiführung einer definierten Lage für das Display angeordnet ist und dass weitere Halteelemente an der Displayblende angebracht sind. Das Display, wir dabei in der horizontalen-Achse in Führungsnute aufgenommen und durch Federarme, die in einem Verbindungspunkt an dem Kunststoffkörper der Displayblende verbunden sind, gegen die Anschläge gedrückt. Am hinteren Ende der Federarme sind Haltemulden angeordnet die zur federnden Lagerung dienen und ein herausfallen des Displays verhindern. Des Weiteren sind Haltelemente am Rand der Displayblende angeordnet die den Rand verstärken und das Display halten.

Gemäß einer bevorzugten Ausführungsform der Erfindung ist vorgesehen, dass für ein elektrisches Verbindungselement jeweils eine Aussparung und/oder Kammer am vorderen Ende der Displayblende angeordnet ist.

Gemäß einer weiteren Ausführungsform der Erfindung ist vorgesehen, dass zwischen die Kontaktreihe der ersten Leiterplatte und die Kontaktreihe des Displays ein Zebra Leitgummi einlegbar ist oder ein Folienleiter angeordnet ist.

Zwischen dem Display und der Leiterplatte ist wahlweise ein Folienleiter als Verbindungselement angebracht oder ein Zebra Leitgummi, bestehend aus einem elastischen Material, angeordnet. Bei einem Verbindungselement welches als Folienleiter angebracht ist, ragt die Folie durch die dafür vorgesehene Aussparung zur Kontaktierung auf der darunter angeordneten Leiterplatte. Bei einem Verbindungselement welches als Zebra Leitgummi angeordnet ist, wird das Leitgummi in der dafür vorgesehenen Kammer aufgenommen, die zur Kontaktierung auf der darunter angeordneten Leiterplatte aufliegt.

Gemäß einer bevorzugten Ausführungsform der Erfindung ist vorgesehen, dass unterschiedlich gestaltete Displays aufgenommen werden können.

Gemäß einer vorteilhaften Ausführungsform der Erfindung ist vorgesehen, dass auf der Unterseite der Displayblende eine Leiterplatte angeordnet ist und die Displayblende Fixierelemente trägt, die zur Fixierung auf der Leiterplatte dienen.

Gemäß einer bevorzugten Ausführungsform der Erfindung ist vorgesehen, dass die Displayblende durch eine entsprechende Öffnung eines Gehäuses eines Endgeräts ragt.

Erfindungsgemäß ist in die Displayblende die Aufnahme einer Lichtführungsplatte vorgesehen, wobei an der Displayblende Nuten und Haltevorrichtungen angeordnet sind, die zur Führung und Aufnahme einer Lichtführungsplatte dienen. Eine LCD Display gibt Prinzip bedingt kein Licht ab, daher wird zur Beleuchtung eine Hintergrundbeleuchtung mit einer Lichtquelle verwendet. Als lichtemittierenden Quelle wird meistens eine Leuchtdiode (LED) verwendet. In der Lichtführungsplatte wird die Punktlichtquelle der LED in eine Flächenlichtquelle umgewandelt. Zur Verbesserung des Lichteintritts sind Lichteinfalllinsen geformt. Die Lichtführungsplatte dient zur Hintergrundbeleuchtung für ein LCD Display. Ferner sind die gezeigten Führungselemente, Rastnasen und Haltefedern dermaßen angeordnet, dass diese in die vorgesehenen Nuten eingreifen können so dass eine exakte Positionierung einer Lichtführungsplatte gewährleistet wird.

Erfindungsgemäß wird ein Verfahren zur Montage einer Displayvorrichtung angegeben, dadurch gekennzeichnet, dass das Display in die Führungsnut der Displayblende in horizontaler Richtung eingeschoben wird und in der eingeschobenen Lage durch mindestens eine am hinteren Ende rastenden Federarm gehalten wird, wobei ein Anschlag zur Herbeiführung einer definierten Lage für das Display angeordnet ist und dass weitere Halteelemente derart an der Displayblende angebracht sind, dass das Display in der Führungsnut auf den Auflagenpunkten gegen den Anschlag gedrückt wird und federnd mit Spielausgleich gehalten wird.

Durch Änderung der Montagerichtung des Displays erreicht man eine Unabhängigkeit der Displaybreite von der Leiterplatte, z.B. dann, wenn diese nicht geändert werden kann oder eine vorhandene genutzt werden muss. Das Display liegt in seiner Endposition in einer Art Schublade. Federnde Elemente sorgen für Spielfreiheit in horizontaler Richtung und verhindern ein Herausrutschen des Displays. Die federnden Elemente verringern gleichzeitig ein Spiel in vertikaler Richtung. Denkbar ist auch eine nachträgliche Montage des Displays, wobei zu allererst die Displayblende auf die Leiterplatte montiert wird und dann das Display in die vorgesehene Führungsnut geschoben wird.

Mit dieser Anordnung erreicht man eine besonders vorteilhafte Fertigung der Montage da man die Montage eines Displays bei der Endfertigung vornehmen kann und ein vorheriges zusammenfügen des Displays mit der Displayblende entfällt. Durch ein solches Vorgehen bleibt man während des Fertigungsprozesses flexibel und kann bereits vorhandene Displays in verschiedenartigen Displayvorrichtungen und damit in mehreren Varianten eines Gehäuses einsetzen.

Bei der Verwendung eines Zebra-Leitgummis als Verbindungselement wird zuerst das Display in die vorgesehene Führungsnut geschoben und im Anschluss die Displayblende auf der Leiterplatte verrastet. Das zusammenfügen des Displays mit der Displayblende ist dabei während der Endfertigung durch eine geeignete Montagevorrichtung vorzunehmen. Das eingelegte Zebra-Leitgummi ist dabei zwischen der Kontaktreihe der Leiterplatte und der Kontaktreihe des Displays angeordnet, somit entfällt zusätzlich das fixieren eines Folienleiters mittels des Heat-Seal-Verfahrens.

Weitere Ausführungsformen ergeben sich aus den abhängigen Ansprüchen und der Beschreibung der Ausführungsbeispiele.

Weitere Vorteile und Merkmale werden in der Beschreibung bevorzugter Ausführungsformen unter Bezug auf die beigefügten Bilder aufgeführt, die im Folgenden erläutert werden:
Figur 1 zeigt eine perspektivische Ansicht einer Displayblende gemäß einer ersten Ausführungsform der vorliegenden Erfindung;
Figur 1a zeigt eine Ansicht der Displayblende gemäß der Ausführungsform mit einem eingelegten Display der vorliegenden Erfindung;
Fig. 2 zeigt eine perspektivische Ansicht eines Displays mit einer Folienleiter als Verbindungselement zur elektrischen Versorgung;
Figur 2a zeigt ein Verbindungselement mit einem Zebra-Leitgummi zur elektrischen Versorgung;
Figur 3 zeigt eine perspektivische Ansicht einer Lichtführungsplatte;
Figur 3a zeigt eine perspektivische Ansicht der erfindungsgemäßen Displayblende mit dem eingelegten Display und der Lichtführungsplatte in einer weiteren Ausführungsform der vorliegenden Erfindung;
Figur 4 zeigt eine Explosionsdarstellung der Anordnung der erfindungsgemäßen Displayblende zusammen mit der Leiterplatte und dem Display;
Figur 4a zeigt eine perspektivische Ansicht der Leiterplatte mit der Displayblende im bereits montierten Zustand wobei die Montagerichtung des Displays angedeutet ist;
Figur 5 zeigt eine perspektivische Ansicht der Leiterplatte mit der Displayblende und dem Display im bereits montierten Zustand;
Figur 5a zeigt eine perspektivische Ansicht der Leiterplatte mit der Displayblende zusammen mit dem Display und der Lichtführungsplatte im bereits montierten Zustand;
Figur 6 zeigt ein Schnittbild durch die Displayblende und dem eingesetzten Display;
Figur 7 zeigt eine Explosionsdarstellung einer Displayvorrichtung gemäß dem Stand der Technik;

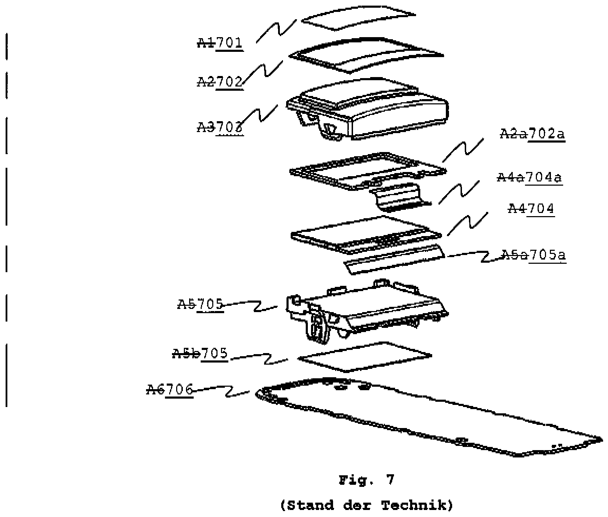

Figur 7 zeigt eine Explosionsdarstellung einer Displayvorrichtung gemäß dem Stand der Technik. Als Schutz gegen Verkratzung ist eine Schutzfolie 701 auf dem Sichtfenster der Displayblende 703 angeordnet. zur Abdichtung gegenüber der gehäuseschale ist ein Schaumpolster 702 angeordnet. Die Displayblende 703 dient zur Aufnahme des Displays 704, wobei das Display 704 zusätzlich mit einem Schaumstoff 702a umrandet ist damit unter anderem das Glas bei der Montage nicht bricht. Der Schaumstoff ist zur Kompensation eventuell auftretender Krafteinwirkung vorgesehen. Abgebildet ist ein Folienleiter 704a welches zur elektrischen Kontaktierung des Displays 704 an die Leiterplatte 706 dient. Weiterhin ist eine Lichtführungsplatte und Displayglasauflage 705 abgebildet die der gezielten Lichtführung dient und einerseits eine Hintergrundbeleuchtung des Displays 704 gewährleistet und gleichzeitig als Auflage für das Display dient. An der Kante der Displayglasauflage 705 ist eine Spiegelfolie 705a angebracht. Für eine gleichmäßige Verteilung des Lichts aus einer Lichtquelle sorgt eine Reflexionsfolie 705b die direkt unterhalb der Lichtführungsplatte 705 angeordnet ist.

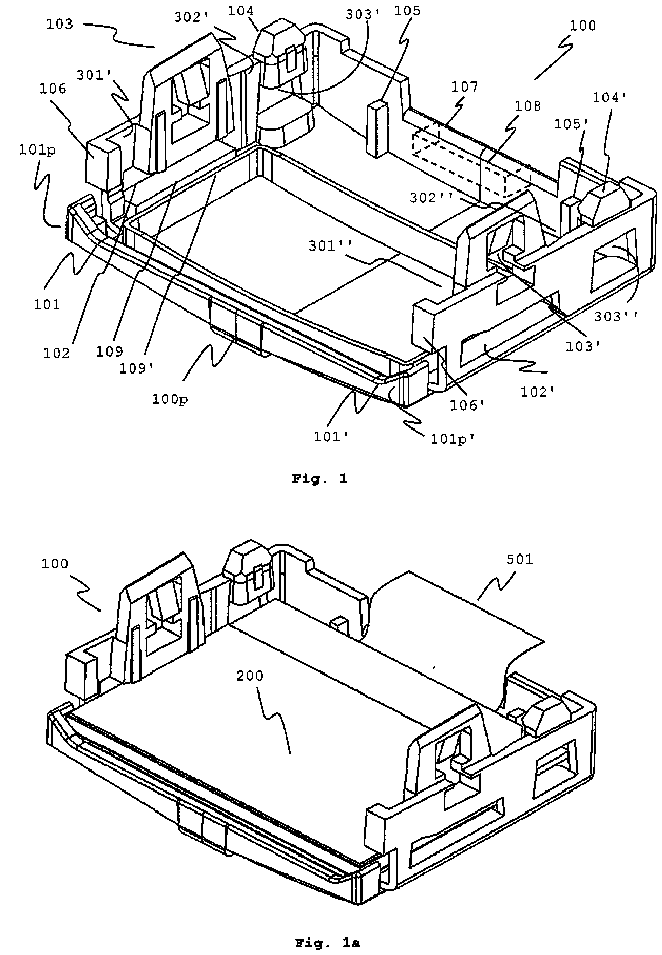

Figur 1 zeigt eine perspektivische Ansicht einer Displayblende gemäß einer ersten Ausführungsform der vorliegenden Erfindung. Die aus einem transparenten Material hergestellte Displayblende 100 nimmt das Display 200, z.B. eine LCD Flüssigkristallanzeige mit einem Trägermaterial aus Glas, auf, die in der horizontalen-Achse in Führungsnute (102, 102') aufgenommen wird und durch Federarme (101, 101'), die in einem Verbindungspunkt 100p an dem Kunststoffkörper der Displayblende 100 verbunden sind, gegen die Anschläge (105,105') gedrückt wird. Am hinteren Ende der Federarme sind Haltemulden (101p, 101p') angeordnet die zur federnden Lagerung dienen und ein herausfallen des Displays 200 verhindern. Durch die Auflagenpunkte (109, 109') wird das federnd gelagerte Display stabilisiert und dient der Verringerung eines Torsionsmoments. Des Weiteren sind Haltelemente (106, 106') am Rand der Displayblende angeordnet die den Rand verstärken und das Display 200 halten.
Die in der Figur 1 mit 301', 301", 302' und 302" bezeichneten Nuten sind dermaßen angeordnet, dass eine exakte Positionierung einer Lichtführungsplatte 300, falls eine Beleuchtung vorgesehen ist, gewährleistet wird. Ferner sind Haltevorrichtungen (303', 303") gegenüberliegend angeordnet, die für die Fixierung der Haltefedern (300d, 300d') einer Lichtführungsplatte 300 vorgesehen sind.

Zur Führung dienen an der Displayblende 100 angebrachte Rasthaken (103, 103') und Fixiernasen (104, 104'), welche durch entsprechende Aussparungen (402a, 402b) der Leiterplatte 400 ragen.

Zwischen dem Display 200 und der Leiterplatte 400 ist wahlweise ein Folienleiter 501 als Verbindungselement angebracht oder ein Zebra Leitgummi 500, bestehend aus einem elastischen Material, angeordnet. Bei einem Verbindungselement welches als Folienleiter 501 angebracht ist, ragt die Folie durch die dafür vorgesehene Aussparung 107 zur Kontaktierung auf der darunter angeordneten Leiterplatte 400. Bei einem Verbindungselement welches als Zebra Leitgummi 500 angeordnet ist, wird das Leitgummi in der dafür vorgesehenen Kammer 108 aufgenommen, die zur Kontaktierung auf der darunter angeordneten Leiterplatte 400 aufliegt. Der elektrische Kontakt zwischen den an dem Display 200 angebrachten und den auf der Leiterplatte 400 mit diesen fluchtend angebrachten Kontaktreihen (201, 401) erfolgt durch Einrasten der Rasthaken (103, 103') in die Leiterplatte 400 und somit die Rasthaken (103, 103') und Fixiernasen (104, 104') in der eingerasteten Position die Displayblende 100 fixieren.

Figur 1a zeigt eine Ansicht der Displayblende gemäß der Ausführungsform mit einem eingelegten Display der vorliegenden Erfindung. Die aus einem transparenten Material hergestellte Displayblende 100 nimmt das Display 200, z.B. eine LCD Flüssigkristallanzeige mit einem Trägermaterial aus Glas, auf, die in der horizontalen-Achse in Führungsnute (102, 102') aufgenommen wird und durch Federarme (101, 101'), gegen die Anschläge (105,105') gedrückt wird. Am hinteren Ende der Federarme sind Haltemulden (101p, 101p') angeordnet die zur federnden Lagerung dienen und ein herausfallen des Displays 200 verhindern. Das abgebildete Verbindungselement welches als Folienleiter 501 an das Display 200 angebracht ist, ragt die Folie durch die dafür vorgesehene Aussparung 107.

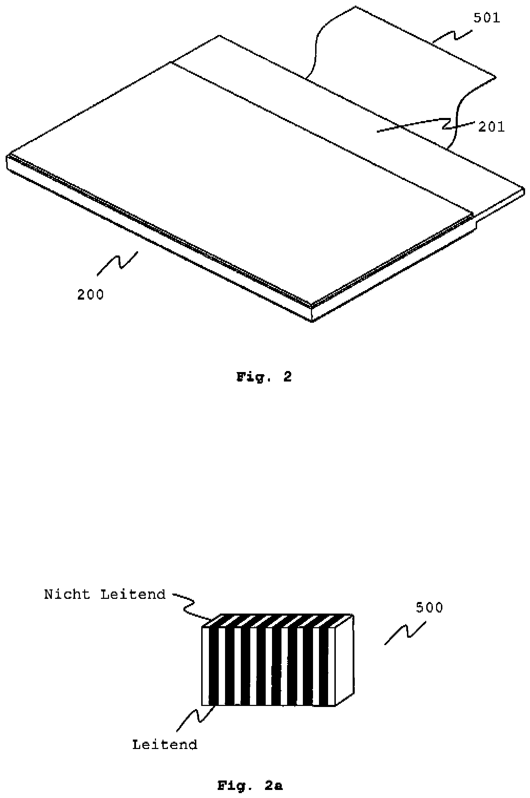

Fig. 2 zeigt eine perspektivische Ansicht eines Displays 200 mit einer Folienleiter 501 als Verbindungselement zur elektrischen Versorgung, wobei der Folienleiter 501 das Display 200, an der vorgesehenen Kontaktreihe 201, kontaktiert.

Figur 2a zeigt ein Verbindungselement mit einem Zebra-Leitgummi, bestehend aus einem elastischen Material, zur elektrischen Versorgung.

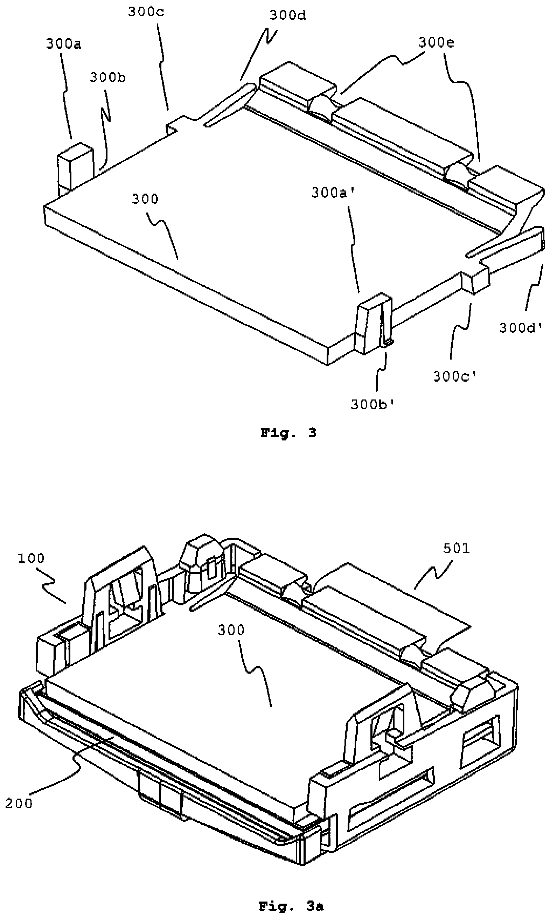

Figur 3 zeigt eine perspektivische Ansicht einer Lichtführungsplatte 300. Die meisten bestehenden Display-Vorrichtungen verwenden LCD-Flüssigkristall-Displays, wie z.B. in Mobiltelefonen. Die LCD-Flussigkristall-Displays geben Prinzip bedingt kein Licht ab, daher wird zur Beleuchtung eine Hintergrundbeleuchtung mit einer Lichtquelle verwendet. Als lichtemittierenden Quelle wird meistens eine Leuchtdiode (LED) verwendet. In der Lichtführungsplatte 300 wird die Punktlichtquelle der LED in eine Flachenlichtquelle umgewandelt. Zur Verbesserung des Lichteintritts sind Lichteinfalllinsen 300e geformt. Die Lichtführungsplatte 300 dient zur Hintergrundbeleuchtung für ein LCD-Flüssigkristall Display 200. Ferner sind die gezeigten Führungselemente (300a, 300a', 300c, 300c'), Rastnasen (300b, 300b') und Haltefedern (300d, 300d') dermaßen angeordnet, dass diese in die, in der Figur 1 mit 301', 301", 302' und 302" bezeichneten Nuten eingreifen können so dass eine exakte Positionierung einer Lichtführungsplatte 300 gewährleistet wird.

Figur 3a zeigt eine perspektivische Ansicht der erfindungsgemäßen Displayblende 100 mit dem eingelegten Display 200 und der Lichtführungsplatte 300 in einer weiteren Ausfuhrungsform der vorliegenden Erfindung. Weiterhin wird das Verbindungselement welches als Folienleiter 501 an das Display 200 angebracht ist, gezeigt.

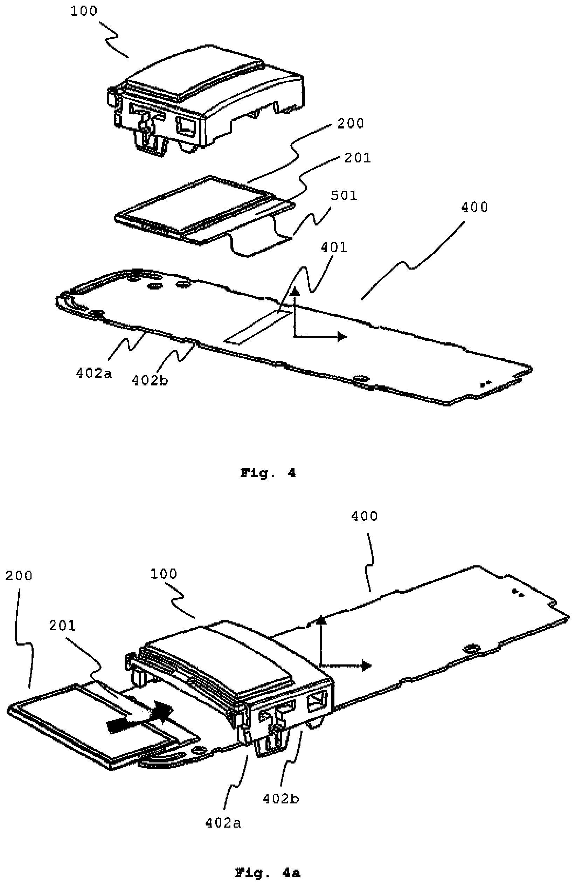

Figur 4 zeigt eine Explosionsdarstellung der Anordnung der erfindungsgemäßen Displayblende 100 zusammen mit der Leiterplatte 400 und dem Display 200.
An der Leiterplatte 400 sind entsprechende Aussparungen (402a, 402b) mit symmetrisch gegenüberliegenden äquivalenten, zu sehen. Diese Aussparungen (402a, 402b) dienen zur Führung und Fixierung der an der Displayblende 100 angebrachten Rasthaken (103, 103') und Fixiernasen (104, 104'). Die fluchtende Überlappung der zwischen den an dem Display 200 angebrachten und den auf der Leiterplatte 400 angebrachten Kontaktreihen (201, 401) erfolgt durch Einrasten der Rasthaken (103, 103') in die Leiterplatte 400 und somit die Rasthaken (103, 103') und Fixiernasen (104, 104') in der eingerasteten Position die Displayblende 100 fixieren. Des Weiteren wird das Verbindungselement welches als Folienleiter 501 an das Display 200 angebracht ist, gezeigt.

Figur 4a zeigt eine perspektivische Ansicht der Leiterplatte 400 mit der Displayblende 100 im bereits montierten Zustand wobei die Montagerichtung des Displays 200 mit einem Pfeil angedeutet ist. Die Ansicht zeigt eine Displayblende 100 im bereits montierten Zustand wo noch kein Display 200 eingelegt wurde. Bei der nachträglichen Montage des Displays 200 wird das Display 200 in die vorgesehene Führungsnut geschoben.

Durch die angedeutete Montage des Displays 200 in der horizontalen Richtung erreicht man eine Unabhängigkeit der Displaybreite von der Leiterplatte, z.B. dann, wenn diese nicht geändert werden kann oder eine vorhandene genutzt werden muss. Das Display liegt in seiner Endposition in einer Art Schublade. Federnde Elemente sorgen für Spielfreiheit in horizontaler Richtung und verhindern ein Herausrutschen des Displays.

Es ist zu erkennen, dass eine nachträgliche Montage des Displays in horizontaler Richtung durch die Anordnung ermöglicht wird. Mit dieser Anordnung erreicht man eine besonders vorteilhafte Fertigung der Montage da man die Montage des Displays 200 bei der Endfertigung vornehmen kann und ein vorheriges Montieren entfällt. Durch ein solches Vorgehen bleibt man während des Fertigungsprozesses flexibel und kann bereits vorhandene Displays 200 in verschiedenartigen Displayvorrichtungen 100 und damit in mehreren Varianten des Gehäuses nutzen.

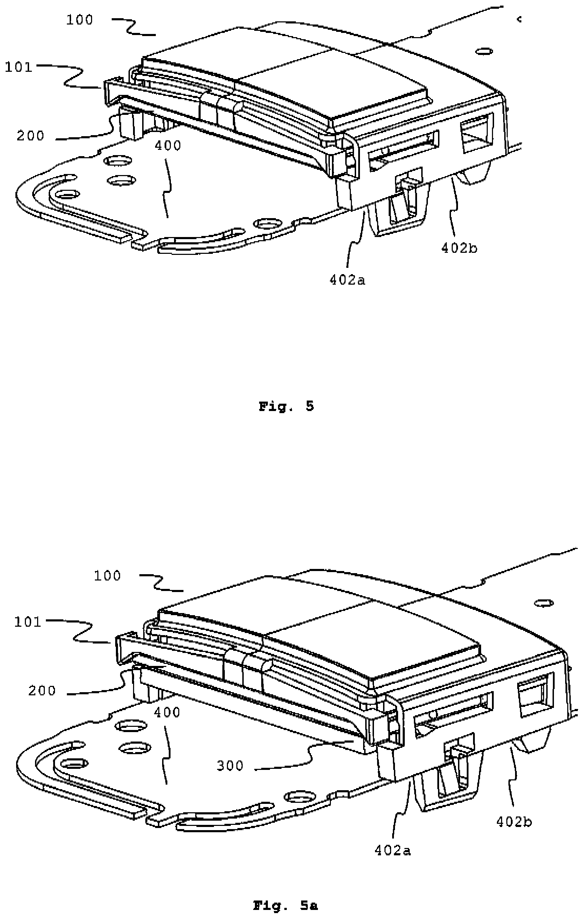

Figur 5 zeigt eine perspektivische Ansicht der Leiterplatte 400 mit der Displayblende 100 und dem Display 200 im bereits montierten Zustand, wobei das Display 200 in der eingeschobenen Lage durch mindestens einen hinter deren Ende rastenden Federarm (101, 101') federnd gehalten wird. An der Leiterplatte 400 sind entsprechende Aussparungen (402a, 402b) mit symmetrisch gegenüberliegenden äquivalenten angedeutet. Diese Aussparungen (402a, 402b) dienen zur Führung und Fixierung der an der Displayblende 100 angebrachten Rasthaken (103, 103') und Fixiernasen (104, 104').

Figur 5a zeigt eine perspektivische Ansicht entsprechend der Figur 5 wobei zusätzlich eine Lichtführungsplatte 300 bereits montiert ist.

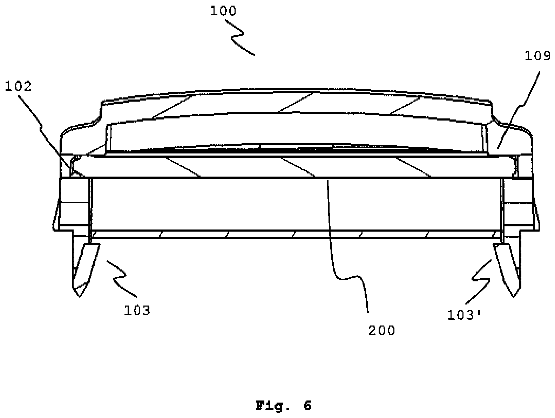

Figur 6 zeigt ein zu Vervollständigung ein Schnittbild durch die Displayblende 100 und dem eingesetzten Display 200. Gezeigt ist die Lagerung des Displays 200 innerhalb der Displayblende 100 die in der horizontalen Achse in Führungsnute (102, 102') greift und wie diese durch die Auflagenpunkte (109, 109') das federnd gelagerte Display 200 stabilisiert wird und zu einer Verringerung von etwaigen Torsionsmomenten führt.

**BEZUGSZEICHENLISTE**

| | |
|---|---|
| Displayblende | 100 |
| Verbindungspunkt | 100p |
| Federarm | 101 |
| Federarm | 101' |
| Haltemulde | 101p |
| Haltemulde | 101p' |
| Führungsnut | 102 |
| Führungsnut | 102' |
| Rasthaken | 103 |
| Rasthaken | 103' |
| Fixiernase | 104 |
| Fixiernase | 104' |
| Anschlag | 105 |
| Anschlag | 105' |
| Halteelement | 106 |
| Halteelement | 106' |
| Aussparung | 107 |
| Kammer | 108 |
| Auflagenpunkt | 109 |
| Auflagenpunkt | 109' |
| Display | 200 |
| Kontaktreihe | 201 |
| Lichtführungsplatte | 300 |
| Führungselement | 300a |
| Führungselement | 300a' |
| Rastnase | 300b |
| Rastnase | 300b' |
| Führungselement | 300c |
| Führungselement | 300c' |
| Haltefeder | 300d |
| Haltefeder | 300d' |
| Lichteinfalllinse | 300e |
| Nut | 301' |
| Nut | 301" |
| Nut | 302' |
| Nut | 302" |
| Haltevorrichtung | 303' |
| Haltevorrichtung | 303" |
| Leiterplatte | 400 |
| Kontaktreihe | 401 |
| Aussparung | 402a |
| Aussparung | 402b |
| Verbindungselement, Zebra Leitgummi | 500 |
| Verbindungselement, Folienleiter | 501 |
| Schutzfolie | 701 |
| Schaumpolster | 702 |
| Schaumstoff | 702a |
| Displayblende | 703 |
| Display | 704 |
| Folienleiter | 704a |
| Lichtführungsplatte und Displayglasauflage | 705 |
| Spiegelfolie | 705a |
| Reflexionsfolie | 705b |
| Leiterplatte | 706 |

## Patentansprüche

1. Displayvorrichtung bei der ein Display (200) in einer aus einem transparenten Material hergestellten Displayblende (100) für die Sichtfreigabe aufgenommen wird, wobei die einstückig ausgebildete Displayblende (100) das Display (200) abdeckt, die Displayblende (100) mit mindestens einer Führungsnut (102, 102') zum Einschieben des Displays (200) versehen ist, das Display (200) in der eingeschobenen Lage durch mindestens einen hinter deren Ende rastenden Federarm (101, 101') federnd gehalten wird, **dadurch gekennzeichnet, dass** in die Displayblende (100) die Aufnahme einer Lichtführungsplatte (300) vorgesehen ist, wobei an der Displayblende (100) Nuten (301', 301", 302', 302") und Haltevorrichtungen (303',303") angeordnet sind, die zur Führung und Aufnahme einer Lichtführungsplatte (300) dienen.

2. Displayvorrichtung nach Anspruch 1, **dadurch gekennzeichnet, dass** die Displayblende (100) an zwei gegenüberliegenden Seiten Rasthaken (103, 103') und/oder an zwei gegenüberliegenden Seiten Fixiernasen (104, 104') aufweist.

3. Displayvorrichtung, nach einem der Ansprüche 1 bis 2, **dadurch gekennzeichnet, dass** mindestens ein Anschlag (105, 105') zur Herbeiführung einer definierten Lage für das Display (200) angeordnet ist und dass weitere Halteelemente (106, 106') an der Displayblende (100) angebracht sind.

4. Displayvorrichtung nach einem der Ansprüche 1 bis 3, **dadurch gekennzeichnet, dass** für ein elektrisches Verbindungselement (500, 501) jeweils eine Aussparung (107) und/oder Kammer (108) am vorderen Ende der Displayblende (100) angeordnet ist.

5. Displayvorrichtung nach einem der Ansprüche 1 bis 4 **dadurch gekennzeichnet, dass** zwischen die Kontaktreihe (401) der ersten Leiterplatte (400) und die Kontaktreihe (201) des Displays (200) ein Zebra Leitgummi (500) einlegbar ist oder ein Folienleiter (501) angeordnet ist.

6. Displayvorrichtung nach einem der Ansprüche 1 bis 5, **dadurch gekennzeichnet, dass** unterschiedlich gestaltete Displays (200) aufgenommen werden können.

7. Displayvorrichtung nach einem der Ansprüche 1 bis 6, **dadurch gekennzeichnet, dass** auf der Unterseite der Displayblende (100) eine Leiterplatte (400) angeordnet ist und die Displayblende (100) Fixierelemente (103, 103', 104, 104') trägt, die zur Fixierung auf der Leiterplatte (400) dienen.

8. Displayvorrichtung nach einem der Ansprüche 1 bis 7, **dadurch gekennzeichnet, dass** die Displayblende (100) durch eine entsprechende Öffnung eines Gehäuses eines Endgeräts ragt.

9. Displayvorrichtung nach einem der vorherigen Ansprüche, **dadurch gekennzeichnet, dass** die Displayvorrichtung für ein Mobiltelefon geeignet ist.

10. Verfahren zur Montage einer Displayvorrichtung, nach Anspruch 1, **gekennzeichnet durch** die folgenden Schritte:
Bereitstellen einer Displayblende (100), wobei die Displayblende (100) mindestens eine Führungsnut (102, 102') zum Einschieben eines Displays (200) umfasst, die Displayblende (100) weiter umfassend mindestens einen am hinteren Ende angeordneten Federarm (101, 101'), die Displayblende einen Anschlag (105, 105') zur Herbeiführung einer definierten Lage für das Display (200) umfasst, die Displayblende (100) weitere Halteelemente (106, 106') umfasst, die Displayblende Auflagenpunkte (109, 109') zur Stabilisierung des Displays (200) umfasst;
Einschieben des Displays (200) in die Führungsnut (102, 102') der Displayblende (100) in horizontaler Richtung, wobei das Display in der eingeschobenen Lage durch den mindestens einen rastenden Federarm (101, 101') gehalten wird, wobei das Display (200) in der Führungsnut (102, 102') durch die weiteren Halteelemente (106, 106') auf den Auflagenpunkten (109, 109') gegen den Anschlag (105, 105') gedrückt wird und federnd mit Spielausgleich gehalten wird.

## Claims

1. A display device in which a display (200) is received in a display cover (100), produced from a transparent material, to provide a clear view of the display, wherein the display cover (100) formed in one piece covers the display (200), the display cover (100) is provided with at least one guide groove (102, 102') for insertion of the display (200), and the display (200) in the inserted position is held in a sprung manner by at least one spring arm (101, 101') latching behind the end of the display, **characterised in that** there is provision for a light-guiding plate (300) to be received in the display cover (100), wherein grooves (301', 301", 302', 302") and holding devices (303', 303") are arranged on the display cover (100) and are used to guide and receive a light-guiding plate (300).

2. The display device according to claim 1, **characterised in that** the display cover (100) has latching hooks (103, 103') on two opposite sides and/or fixing lugs (104, 104') on two opposite sides.

3. The display device according to either one of claims 1 to 2, **characterised in that** at least one stop (105, 105') is arranged to bring about a defined position for the display (200), and **in that** further holding elements (106, 106') are attached to the display cover (100).

4. The display device according to any one of claims 1 to 3, **characterised in that** a recess (107) and/or chamber (108) are/is arranged on the front end of the display cover (100) for an electrical connection element (500, 501).

5. The display device according to any one of claims 1 to 4, **characterised in that** a Zebra conductive rubber (500) may be inserted or a film conductor (501) is arranged between the row of contacts (401) of the first printed circuit board (400) and the row of contacts (201) of the display (200).

6. The display device according to any one of claims 1 to 5, **characterised in that** displays (200) of different design may be received.

7. The display device according to any one of claims 1 to 6, **characterised in that** a printed circuit board (400) is arranged on the underside of the display cover (100) and the display cover (100) carries fixing elements (103, 103', 104, 104'), which are used for fixing on the printed circuit board (400).

8. The display device according to any one of claims 1 to 7, **characterised in that** the display cover (100) protrudes through a corresponding opening in a housing.

9. The display device according to any one of the preceding claims, **characterised in that** the display device is suitable for a mobile telephone.

10. A method for assembling a display device according to claim 1, **characterised by** the following steps:
providing a display cover (100), wherein the display cover (100) comprises at least one guide groove (102, 102') for insertion of a display (200), the display cover (100) further comprises at least one spring arm (101, 101') arranged on the rear end, the display cover comprises a stop (105, 105') for bringing about a defined position for the display (200), the display cover (100) comprises further holding elements (106, 106'), and the display cover comprises support points (109, 109') for stabilising the display (200);
inserting the display (200) into the guide groove (102, 102') of the display cover (100) in the horizontal direction, wherein the display is held in the inserted position by the at least one latching spring arm (101, 101'), wherein the display (200) in the guide groove (102, 102') is pressed onto the support points (109, 109') against the stop (105, 105') by the further holding elements (106, 106') and is held in a sprung manner with compensation of play.

## Revendications

1. Dispositif d'affichage, chez lequel un affichage (200) est logé dans un écran d'affichage (100) fabriqué dans un matériau transparent pour une libération de la visibilité, où l'écran d'affichage (100) formé en une seule pièce recouvre l'affichage (200), l'écran d'affichage (100) est muni d'au moins une rainure de guidage (102, 102') pour l'insertion de l'affichage (200), l'affichage (200) est maintenu de manière élastique dans la position insérée par au moins un bras à ressort (101, 101') à l'arrière de son extrémité, **caractérisé en ce que** la réception d'une plaque guide de lumière (300) est prévue dans l'écran d'affichage (100), où des écrous (301', 301", 302', 302") et des dispositifs de fixation (303', 303") sont disposés sur l'écran d'affichage (100) qui servent au guidage et à la réception d'une plaque guide de lumière (300).

2. Dispositif d'affichage selon la revendication 1, **caractérisé en ce que** l'écran d'affichage (100) présente des crochets de verrouillage (103, 103') au niveau de deux côtés opposés et/ou des proéminences de fixation (104, 104') au niveau de deux côtés opposés.

3. Dispositif d'affichage selon l'une des revendications 1 à 2, **caractérisé en ce qu'**au moins une butée (105, 105') est disposée pour la définition d'une position définie pour l'affichage (200) et que d'autres éléments de fixation (106, 106') sont rapportés sur l'écran d'affichage (100).

4. Dispositif d'affichage selon l'une des revendications 1 à 3, **caractérisé en ce que** respectivement un évidement (107), et/ou une chambre (108), est disposé(e) sur l'extrémité avant de l'écran d'affichage (100) pour un élément de raccordement (500, 501) électrique.

5. Dispositif d'affichage selon l'une des revendications 1 à 4, **caractérisé en ce qu'**un caoutchouc de guidage (500) zébré peut être posé ou qu'un conducteur en film (501) est disposé entre le banc de contact (401) du premier circuit intégré (400) et le banc de contact (201) de l'affichage (200).

6. Dispositif d'affichage selon l'une des revendications 1 à 5, **caractérisé en ce que** des affichages (200) conçus de manière différente peuvent être logés.

7. Dispositif d'affichage selon l'une des revendications 1 à 6, **caractérisé en ce qu'**un circuit intégré (400) est disposé sur le côté inférieur de l'écran d'affichage (100) et que l'écran d'affichage (100) porte des éléments de fixation (103, 103', 104, 104') qui servent à la fixation sur le circuit intégré (400).

8. Dispositif d'affichage selon l'une des revendications 1 à 7, **caractérisé en ce que** l'écran d'affichage (100) dépasse hors d'un orifice correspondant d'un boitier d'un appareil terminal.

9. Dispositif d'affichage selon l'une des revendications précédentes, **caractérisé en ce que** le dispositif d'affichage est approprié pour un téléphone mobile.

10. Procédé de montage d'un dispositif d'affichage selon la revendication 1, **caractérisé par** les étapes suivantes :
de fourniture d'un écran d'affichage (100), l'écran d'affichage (100) présentant au moins une rainure de guidage (102, 102') pour l'insertion d'un affichage (200), l'écran d'affichage (100) comprenant en outre au moins un bras à ressort (101, 101') disposé au niveau de l'extrémité arrière, l'écran d'affichage comprenant une butée (105 ; 105') pour la définition d'une position définie pour l'affichage (200), l'écran d'affichage (100) comprend d'autres éléments de fixation (106, 106'), l'écran d'affichage comprend des points d'appui (109, 109') pour la stabilisation de l'affichage (200) ;
d'insertion de l'affichage (200) dans la rainure de guidage (102, 102') de l'écran d'affichage (100) dans la direction horizontale, où l'affichage est maintenu dans la position insérée par l'au moins un bras à ressort (101, 101') se verrouillant, où l'affichage (200) est pressé par les autres éléments de fixation (106, 106') dans la rainure de guidage (102, 102') sur les points d'appui (109, 109') contre la butée (105, 105') et est maintenu de manière élastique avec un rattrapage de jeu.
